Europäisches Patentamt

European Patent Office

Office européen des brevets

(19)

(11) Publication number: **0 031 608**
**B1**

(12) **EUROPEAN PATENT SPECIFICATION**

(45) Date of publication of patent specification: **14.03.84**

(51) Int. Cl.³: **B 01 J 3/02, B 02 C 13/18,
C 10 J 3/50, F 04 D 23/00**

(21) Application number: **80201151.0**

(22) Date of filing: **04.12.80**

(54) A method and apparatus for the feeding of solid particles to a pressurized vessel.

(30) Priority: **28.12.79 NL 7909336**

(43) Date of publication of application:
**08.07.81 Bulletin 81/27**

(45) Publication of the grant of the patent:
**14.03.84 Bulletin 84/11**

(84) Designated Contracting States:
**DE FR GB NL**

(56) References cited:
**DE - A - 2 617 490
DE - A - 2 740 961
DE - C - 369 950
DE - C - 597 620
US - A - 2 495 152
US - A - 3 150 838
US - A - 3 606 182
US - A - 4 034 870**

(73) Proprietor: **SHELL INTERNATIONALE RESEARCH
MAATSCHAPPIJ B.V.
Carel van Bylandtlaan 30
NL-2596 HR Den Haag (NL)**

(72) Inventor: **van der Burght, Maarten Johannes
Carel van Bylandtlaan 30
NL-2596 HR The Hague (NL)**

(74) Representative: **Puister, Antonius Tonnis, Mr. et al,
P.O. Box 302
NL-2501 CH The Hague (NL)**

Courier Press, Leamington Spa, England.

## A method and apparatus for the feeding of solid particles to a pressurized vessel

The application relates to a method and an apparatus for the feeding of solids to a pressurized vessel by means of a centrifugal pump which comprises a rotor arranged rotatably in the vessel, which rotor consists of two co-axial trays the concaves of which face each other, and a feed inlet connected axially to the rotor, in which process coarse solids are supplied to the rotating rotor which subsequently expels them against at least one impact surface. The application also relates to an apparatus which is suitable for the use of said method.

Such a method and apparatus are known from U.S. patent specification No. 2,495,152. These centrifugal pumps are used to feed powders or granular materials, for example reagents or catalysts, to some space in which the pressure is higher than outside. It is obvious that these pumps can also be used in situations without pressure difference.

When these pumps are in operation, the solid matter is cast through the feed inlet onto the rotating rotor.

Owing to the centrifugal acceleration the solid particles acquire a high velocity which enables them to overcome the difference in pressure between the inside and the outside of the vessel and to prevent leakge of gas from the high-pressure vessel.

In certain centrifugal pumps the rotor is provided with a number of radial passages, known as centrifugal nozzles, between the two trays. In other types the solid matter can be expelled over the entire circumference of the rotor through a narrow slot which is defined by the edges of the two trays. In that case it is also possible to allow the two trays to rotate at different speeds in order to prevent clogging of the slot.

The solids leave the edge of the rotor with a radial and a tangential velocity component. In the usual embodiments the rotor has a rotational speed of, for example, 500—5000 rev./min. and the particles acquire a radial velocity of about 10 m/s and a tangential velocity of about 100 m/s. In this manner it is possible to overcome pressure differences of some tens of bars, for example 20—40 bars.

The driving of the rotor then requires energy at the approximate rate of 5—15 kW/t of material, depending on the capacity, and in the case of large pumps it is expedient to investigate ways and means of saving or recovering energy.

It would be obvious to simply reduce the rotor speed in order to improve energy consumption. This is useless, however, for a high rotational speed is in fact required on the one hand to overcome the difference in pressure between the inside and the outside of the vessel, and on the other hand to ensure a large throughput of material.

It has now been found that the translation energy of the expelled solids, which is normally absorbed by uncontrolled collisions with the casing of the vessel or with the impact surface(s) or by friction with the gas surrounding the particles, can be used further by supplying coarse solids to the rotating rotor which subsequently expels them centrifugally and by passing the expelled solids against at least one impact surface, in such a way that pulverization takes place.

The application therefore relates to a method for the feeding of solids to a pressurized vessel by means of a centrifugal pump which comprises a rotor arranged rotatably in the vessel, which rotor consists of two co-axial trays, the concaves of which face each other, and a feed inlet connected axially to the rotor, in which process coarse solids are supplied to the rotating rotor which subsequently expels them centrifugally against at least one impact surface, characterized in that the expelled solids are passed against the impact surface(s) in an at least substantially perpendicular manner.

There are pulverizers in which the materials to be ground are cast against an impact surface by means of a fluid, but said pulverizers are not also suitable to transport solids against a higher pressure.

Since the solids are not only transported but also pulverized in the centrifugal pump, it is possible to start from coarse particles and thus wholly or partly omit the grinding before the supply to the centrifugal pump. The particle size of the coarse material need not be smaller than is necessary to prevent the slot or the centrifugal nozzles of the rotor from becoming clogged, that is to say that 95% of the coarse particles preferably have dimensions in the range of 0.1 to 0.5 mm. Owing to collision against an impact surface the average particle size is reduced by about 2 to 10 times.

Larger particles are further reduced than the smaller with the result that according to the invention also a narrowing of the particle size distribution takes place. This is of course an additional, important advantage in numerous processes where centrifugal pumps are used.

After the collision with the impact surface the pulverized particles drop on the bottom of the vessel. From there they can be transported further by suitable means.

Each impact surface is preferably directed at least substantially parallel to the rotor shaft. If desired, it may make a very small angle with the rotor shaft to ensure that the solids are directed to the bottom of the vessel after the collision. In order to make the expelled solids strike the impact surface in an at least substantially perpendicular manner, since the particles in fact leave the rotor in a slightly divergent manner, the impact surfaces have to be slightly curved, so that the radius of curvature reaches the rotor at an angle which is equal to the angle at which the particles leave the rotor under typical operating conditions. Since the rotor rotates and, consequently, everywhere around the rotor centre solids leave the rotor edge, both the above-mentioned requirement and the fact that in practice a finite number of impact surfaces have to be used, result in the trajectories of the particles being unequal and dependent on the point where they leave the rotor. For reasons of design the number of impact surfaces will neither be too large nor too small. A number of 8—40 impact surfaces is preferred.

The invention, therefore, further relates to an apparatus for the feeding of solids to a gas-containing vessel, consisting of a centrifugal pump comprising a rotor arranged rotatably in the vessel and a feed inlet connected to the rotor, which apparatus further comprises at least one impact surface fitted around the rotor at least substantially parallel to the rotor shaft, characterized in that each impact surface forms a saw-tooth, the apex of each saw-tooth being located on a circle around the rotor.

In this configuration a maximum quantity of the expelled solids collides perpendicularly with an impact surface so that a maximum degree of pulverization takes place.

It is possible to fit one or more separate impact surfaces in the vessel, so that a kind of casing is formed around the rotor in the vessel. In the case of low excess pressures it is advantageous to combine said two design features, so that each impact surface forms part of the casing of the vessel.

Depending on the hardness of the solids, on the hardness of the impurities therein, on the quantity of material treated, etc., the impact surfaces will occasionally want replacement because they are worn out. Therefore, each impact surface is preferably exchangeable. A possibility is, for example, a kind of coating or plating which can be renewed wherever required, perhaps merely by fitting a new lining on top of the worn out one.

The material of the impact surface is, for example, stellite or another wear-resistant material. It is also possible to coat the impact surface with hard particles (harder than the particles expelled by the rotor), for example with diamond powder or refractories.

Another solution to the problem of reducing wear is to cover or line each impact surface with a layer of the material which is expelled from the rotor. The result of this covering is that direct collisions between the (former) impact surface and the solids no longer occur, but that the solids are now pulverized against each other. In order to cover the impact surface with a layer of solids, the surface can be provided with raised walls. These walls directed to the rotor form a kind of open box, which is filled with solids when the centrifugal pump starts to operate. As soon as the "box" has been filled, the solids which are subsequently cast on it drop out of or rebound from the box after having been or not having been pulverized.

Owing to the continuous impacts of rapidly moving particles against the impact surfaces, the temperature of said surfaces will rise. In order to prevent overheating, it is possible to provide the rear of each surface with a cooling device, such as cooling ribs, and cool them, if desired, by the forced method, by means of water or a similar coolant. Especially when the material to be transported consists of coal particles, overheating is undesirable. Firstly they start sticking and secondly they may ignite if oxygen is present. When treating combustible or explosive powders, however, the vessel containing the centrifugal pump is mostly filled with an inert gas.

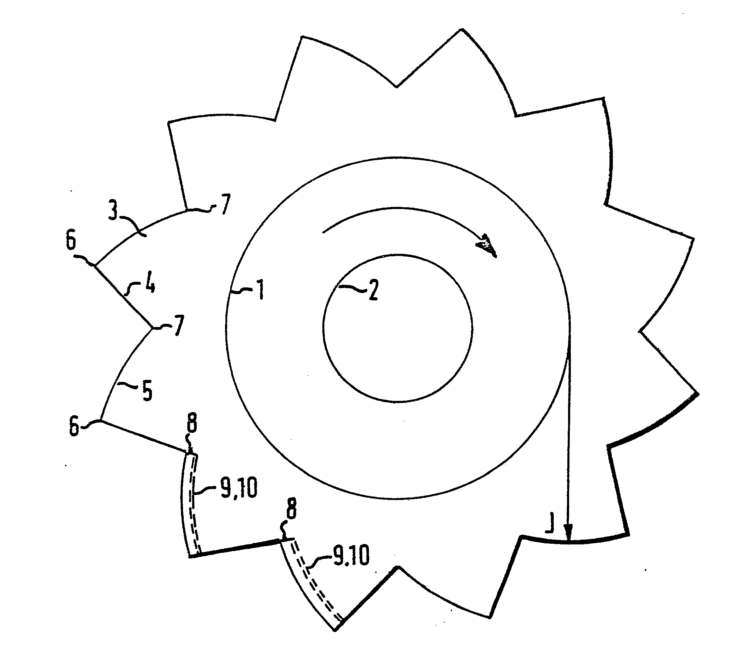

The invention will now be discussed further with reference to the Figure, which shows diagrammatically a cross-section of a centrifugal pump which comprises a rotor 1, a feed inlet 2 and a casing of a vessel 3. The casing of the vessel is designed as a number of saw-teeth, each consisting of a straight side 4 and a curved side 5, especially the latter acting as impact surface. The apices 6 of the saw-teeth are located on a circle, as are the bases 7. The impact surfaces can be provided with walls 8 in the extension of the straight side 4 of the next saw-tooth, seen in the direction of rotation of the rotor 1, and with walls 9, 10 above and below the plane of the drawing (only a few walls have been drawn). These walls, the curved surface 5 and the straight side 4 form an open box which is filled with solids during operation.

The application in particular relates to a method for the gasification of solid carbon-containing fuel in a high-pressure gasification reactor, characterized in that the fuel is fed to the reactor by the method described hereinbefore.

## Claims

1. A method for the feeding of solids to a pressurized vessel by means of a centrifugal pump which comprises a rotor arranged rotatably in the vessel, which rotor consists of two co-axial trays the concaves of which face each other, and a feed inlet connected axially to the rotor, in which process coarse solids are supplied to the rotating rotor which subsequently expels them centrifugally against at least one impact surface, characterized in that the expelled solids are passed against the impact surface(s) in an at least substantially perpendicular manner.

2. Apparatus for the feeding of solids to a gas-containing vessel, consisting of a centrifugal pump comprising a rotor arranged rotatably in the vessel and a feed inlet connected to the rotor, which apparatus further comprises at least one impact surface fitted around the rotor at least substantially parallel to the rotor shaft, characterized in that each impact surface forms a saw-tooth, the apex of each saw-tooth being located on a circle around the rotor.

3. Apparatus as claimed in claim 2, characterized in that each impact surface is exchangeable.

4. Apparatus as claimed in claim 2 or 3, characterized in that each impact surface is provided with raised walls.

5. Apparatus as claimed in any one or more of claims 2—4, characterized in that each impact surface is provided with a cooling device.

**Revendications**

1. Un procédé pour introduire des particules solides dans un récipient sous pression au moyen d'une pompe centrifuge qui comprend un rotor disposé de façon à tourner dans le récipient, ce rotor étant constitué de deux plateaux coaxiaux ayant leurs faces concaves orientées l'une vers l'autre, et une entrée d'alimentation reliée axialement au rotor, procédé dans lequel on fait arriver des particules grossières au rotor tournant qui les envoie ensuite de manière centrifuge contre au moins une surface d'impact, caractérisé en ce que les particules solides chassées sont envoyées contre la ou les surfaces d'impact d'une manière au moins sensiblement perpendiculaire.

2. Un appareil pour introduire des particules solides dans un récipient contenant un gaz, constitué d'une pompe centrifuge comprenant un rotor disposé de façon à tourner dans le récipient et une entrée d'alimentation reliée au rotor, cet appareil comprenant en outre au moins une surface d'impact disposée autour du rotor et au moins sensiblement parallèle à l'arbre du rotor, caractérisé en ce que chaque surface d'impact forme une dent de scie, le sommet de chaque dent de scie étant situé sur un cercle autour du rotor.

3. Un appareil selon la revendication 2, caractérisé en ce que chaque surface d'impact est remplaçable.

4. Un appareil selon la revendication 2 ou 3, caractérisé en ce que chaque surface d'impact est pourvue de parois en saillie.

5. Un appareil selon l'une quelconque des revendications 2 à 4, caractérisé en ce que chaque surface d'impact est pourvue d'un dispositif de refroidissement.

**Patentansprüche**

1. Verfahren für die Zufuhr von Feststoffen in einen unter Überdruck gesetzten Behälter mittels einer Zentrifugalpumpe, die einen drehbar im Behälter angeordneten Rotor umfaßt, der aus zwei koaxialen Schalenelementen besteht, deren Konkavseiten einander zugewandt sind, und eines axial mit dem Rotor verbundenen Zuführungseinlasses, in welchem Verfahren grobe Feststoffe dem sich drehenden Rotor zugeführt werden, der sie darauf zentrifugal gegen zumindest eine Aufschlagfläche ausstößt, dadurch gekennzeichnet, daß die ausgestoßenen Feststoffe auf eine zumindest im wesentlichen senkrechte Weise gegen die Aufschlagfläche(n) befördert werden.

2. Vorrichtung für die Zufuhr von Feststoffen in einen Gas enthaltenden Behälter, bestehend aus einer Zentrifugalpumpe, die einen drehbar im Behälter angeordneten Rotor umfaßt, und einem mit dem Rotor verbundenen Zuführungseinlaß, wobei die Vorrichtung weiter zumindest eine um den Rotor zumindest im wesentlichen parallel zur Rotorwelle angebrachte Aufschlagfläche umfaßt, dadurch gekenzeichnet, daß jede Aufschlagfläche einen Sägezahn bildet, wobei die Spitze eines jeden Sägezahns auf einem Kreis um dem Rotor angeordnet ist.

3. Vorrichtung nach Anspruch 2, dadurch gekennzeichnet, daß jede Aufschlagfläche austauschbar ist.

4. Vorrichtung nach Anspruch 2 oder 3, dadurch gekennzeichnet, daß jede Aufschlagfläche mit erhöhten Wänden versehen ist.

5. Vorrichtung nach einem oder mehreren der Ansprüche 2 bis 4, dadurch gekennzeichnet, daß jede Aufschlagfläche mit einer Kühleinrichtung versehen ist.